(19) Europäisches Patentamt
European Patent Office
Office européen des brevets

(11) **EP 4 773 088 A1**

(12) **DEMANDE DE BREVET EUROPEEN**

(43) Date de publication:
**08.07.2026 Bulletin 2026/28**

(21) Numéro de dépôt: **25201917.9**

(22) Date de dépôt: **12.09.2025**

(51) Classification Internationale des Brevets (IPC):
**G06V 10/10** (2022.01)    **G06V 10/25** (2022.01)
**G06V 10/82** (2022.01)    **G06V 10/98** (2022.01)
**G06V 40/12** (2022.01)    **G06V 40/10** (2022.01)

(52) Classification Coopérative des Brevets (CPC):
**G06V 40/12; G06V 10/16; G06V 10/25;
G06V 10/82; G06V 10/993; G06V 40/1335;
G06V 40/155**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **03.01.2025 FR 2500032**

(71) Demandeur: **Idemia Public Security France
92400 Courbevoie (FR)**

(72) Inventeurs:
• **NIAF, Emilie
92400 Courbevoie (FR)**
• **KAZDAGHLI, Laurent
92400 Courbevoie (FR)**

(74) Mandataire: **IPS
2, place Samuel de Champlain
92400 Courbevoie (FR)**

(54) **PROCÉDÉ DE CONSTRUCTION D'UN DACTYLOGRAMME PALMAIRE INTÉGRAL À PARTIR DE DACTYLOGRAMMES PALMAIRES PARTIELS**

(57) Procédé **500** de reconstitution d'un dactylogramme palmaire de l'intégralité d'une paume d'une main, le procédé comprend les étapes suivantes :

(a) Acquérir **501** un dactylogramme palmaire partiel d'une région de la paume d'une main ;

(b) Former **502** un dactylogramme reconstitué intermédiaire par mise en mosaïque du dactylogramme palmaire partiel ;

(c) Calculer **503** la valeur d'un critère de qualité du dactylogramme reconstitué intermédiaire ;

(d) Répéter **504** les étapes **502** à **503** tant que la valeur du critère de qualité est inférieure à une valeur seuil, à chaque itération le dactylogramme palmaire partiel acquis à l'étape **501** étant rejeté ;

(e) Déterminer **505** au moins une région parmi les régions de la paume de la main non couverte par le dactylogramme reconstitué intermédiaire ;

(f) Répéter **506** les étapes **501** à **505** en sélectionnant, lors de l'étape **501,** la région déterminée à l'étape **505,** tant que le dactylogramme reconstitué intermédiaire ne couvre pas l'intégralité des régions de la paume de la main.

## Description

**Domaine technique**

La présente invention concerne un procédé de construction d'un dactylogramme palmaire intégral à partir de dactylogrammes palmaires partiels.

**Arrière-plan technique**

La dactyloscopie est un procédé d'identification des individus fondée sur l'exploitation des dactylogrammes qui sont également connus sous les expressions « d'empreintes papillaires » comprenant les « empreintes digitales » et les « empreintes palmaires ». Ce procédé est notamment utilisé par les services d'anthropométrie judiciaire ou par les systèmes civils d'identification lors, par exemples, des démarches administratives, de passage aux frontières ou d'accès à des lieux sécurisés.

Les dactylogrammes sont des dessins que forment les traces laissées sur les surfaces par les dermatoglyphes des doigts et/ou des paumes de main. Les dermatoglyphes sont les sillons superficiels formés sur les paumes, les plantes et la pulpe des doigts par les crêtes dermiques et disposés en lignes ou spirales. Ils sont propres à chaque individu et les dessins qu'ils forment en constituent une « carte d'identité » anthropométrique grâce à laquelle il peut être identifié. Le relevé des dactylogrammes est une pratique courante dans diverses démarches administratives auprès des institutions d'Etat et dans les opérations menées par les forces de l'ordre auprès d'un suspect ou d'un prévenu dans le cadre d'une infraction, d'un délit, d'un crime, ou d'une enquête judiciaire.

Il est courant de procéder à l'acquisition d'un dactylogramme palmaire intégral à l'aide de dispositifs munis d'une surface d'acquisition permettant l'acquisition d'une paume entière d'un individu en une seule acquisition, et ce quelle que soit la taille de la paume. Cependant, un tel dispositif est encombrant et peu transportable.

En pratique, notamment pour les activités de terrain, un dispositif mobile de plus petite dimension est préféré car plus ergonomique. Un exemple de dispositif mobile courant sont les dispositifs dont les dimensions de la surface d'acquisition sont conformes à la norme type « FAP 60 » à savoir 76 mm x 81 mm. Or, la largeur moyenne d'une paume de main d'un individu de sexe masculin est 89 mm. Un tel dispositif ne permet donc pas d'acquérir l'empreinte palmaire de l'intégralité d'une paume en une seule acquisition pour une très grande majorité d'individus. Une solution consiste à procéder à l'acquisition de dactylogrammes palmaires partiels, puis à la reconstruction d'un dactylogramme palmaire intégrale à l'aide d'un traitement d'images.

EP 4 273 815 A1 [IDEMIA IDENTITY & SECURITY FRANCE [FR]] 08.11.2023 décrit une méthode de construction, par mise en mosaïque, d'un dactylogramme de l'intégralité d'une paume à partir de dactylogrammes palmaires partiels présentant des zones de recouvrement.

**Résumé de l'invention**

La complétude et la qualité d'une reconstruction d'un dactylogramme palmaire intégral à partir de dactylogrammes palmaires partiels reposent principalement sur le recouvrement de la paume que les dactylogrammes palmaires partiels sont susceptibles de permettre lors de leur assemblage. Face à ce problème, un opérateur humain peut rencontrer plusieurs écueils, très souvent rédhibitoires. Notamment, le nombre d'images de dactylogrammes partiels acquis peut être insuffisant pour couvrir toutes les zones pertinentes de la paume. Et, quand bien même l'opérateur multiplierait les acquisitions, il n'y a aucune garantie que l'ensemble de la paume soit correctement couvert, et/ou que la qualité des dactylogrammes partiels acquis soit suffisante pour permettre leur exploitation. Il en résulte une perte de temps et un manque d'efficacité opérationnelle.

Un premier aspect de l'invention concerne un procédé **500** de reconstitution d'un dactylogramme palmaire de l'intégralité d'une paume d'une main, le procédé comprend les étapes suivantes :

(a) Acquérir **501** un dactylogramme palmaire partiel d'une région de la paume d'une main ;
(b) Former **502** un dactylogramme reconstitué intermédiaire par mise en mosaïque du dactylogramme palmaire partiel ;
(c) Calculer **503** la valeur d'un critère de qualité du dactylogramme reconstitué intermédiaire ;
(d) Répéter **504** les étapes **502 à 503** tant que la valeur du critère de qualité est inférieure à une valeur seuil, à chaque itération le dactylogramme palmaire partiel acquis à l'étape **501** étant rejeté ;
(e) Déterminer **505** au moins une région parmi les régions de la paume de la main non couverte par le dactylogramme reconstitué intermédiaire ;
(f) Répéter **506** les étapes **501 à 505** en sélectionnant, lors de l'étape **501,** la région déterminée à l'étape **505,** tant que le dactylogramme reconstitué intermédiaire ne couvre pas l'intégralité des régions la paume de la main.

Selon certains modes de réalisation, l'étape **505** comprend une étape **505a** de détermination d'une boîte englobante dont les dimensions géométriques correspondent à celles d'une taille de paume intégrale estimée à partir du dactylogramme reconstitué intermédiaire.

Selon certains modes de réalisation, les paramètres de la boîte englobante comprennent le centre de la boîte englobante, un vecteur d'orientation, une largeur, une hauteur et une classe parmi la main droite et la main gauche.

Selon certains modes de réalisation, la boîte englobante est déterminée à l'aide d'un un réseau de neurones convolutif.

Selon certains modes de réalisation, le procédé **500** comprend, avant l'étape **505,** une étape **505a** de détermination d'un masque graphique du dactylogramme reconstitué intermédiaire, et, à l'étape **505,** une étape de superposition du masque graphique et de la boîte englobante, la région non couverte par le dactylogramme reconstitué intermédiaire étant la région de la boîte englobante non couverte par le masque graphique.

Selon certains modes de réalisation, la boîte englobante comprend cinq régions parmi une partie supérieure de la paume, une partie inférieure de la paume, une partie gauche de la paume, une partie droite de la paume et un centre de paume.

Selon certains modes de réalisation, le critère de qualité est une valeur moyenne du gradient du dactylogramme reconstitué intermédiaire.

Un deuxième aspect de l'invention concerne un système d'acquisition d'un dactylogramme palmaire de l'intégralité d'une paume d'une main, le système comprend :

- un dispositif mobile d'acquisition de dactylogramme palmaire ;
- un dispositif de traitement de données configuré pour recevoir dactylogramme palmaire partiel du dispositif mobile d'acquisition, et comprenant des moyens pour la mise en œuvre d'un procédé **500** de reconstitution selon l'un des quelconques modes de réalisation.

Selon certains modes de réalisation, le système comprend en outre un dispositif d'affichage configuré pour afficher le dactylogramme reconstitué intermédiaire, la région de la paume de main non couverte par le dactylogramme reconstitué intermédiaire et sélectionnée à l'étape **506** du procédé **500** de reconstitution selon le premier aspect de l'invention.

**Brève description des dessins**

**Fig. 1** est une représentation schématique d'un dispositif d'acquisition de dactylogrammes.

**Fig. 2** est une représentation schématique d'une paume de main divisée en plusieurs régions.

**Fig. 3** est un exemple de dactylogramme palmaire partiel couvrant une partie de la paume d'une main.

**Fig. 4** est une représentation schématique d'un dactylogramme palmaire reconstitué intermédiaire à partir de trois dactylogrammes palmaires partiels.

**Fig. 5** est un ordinogramme d'un procédé de constitution d'un dactylogramme palmaire intégral selon le premier aspect de l'invention.

**Fig. 6** est une représentation schématique d'une boîte englobante estimée à partir d'une dactylogramme palmaire reconstitué intermédiaire.

**Fig. 7** est une représentation schématique d'un masque graphique d'un dactylogramme palmaire reconstitué intermédiaire.

**Description détaillée des modes de réalisation**

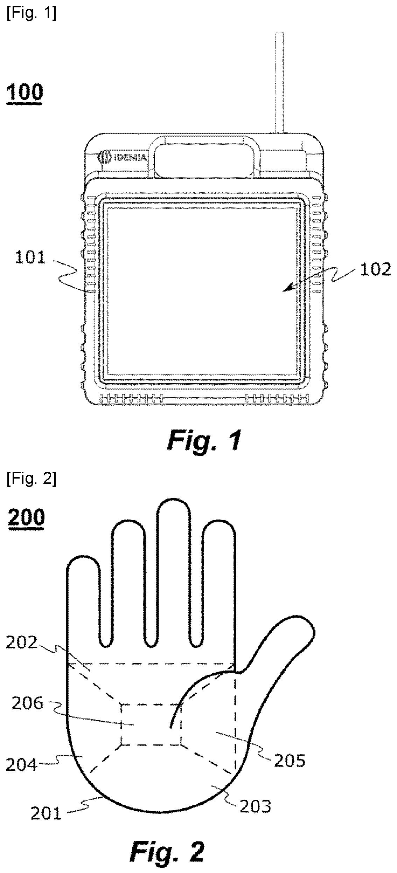

En référence à la **Fig. 1,** un dispositif **100** mobile d'acquisition de dactylogrammes est, par exemple, un dispositif de petites dimensions, généralement conforme au standard FAP 60, comprenant un boitier électronique **101** et une surface **102** d'acquisition d'une taille 76 x 81 mm laquelle seulement une partie de la main peut être apposée pour en acquérir une image des dermatoglyphes. La telle surface **102** d'acquisition ne permet pas d'acquérir un dactylogramme de l'intégralité d'une paume en une seule acquisition pour une très grande majorité d'individus. Les dactylogrammes acquis par le dispositif **100** se présentent généralement sous la forme d'une image des dessins formés par les dermatoglyphes. Ces images peuvent être des images monocanales, par exemple, une image en niveaux de gris, ou des images multicanales, par exemple des images RGB.

En référence à la **Fig. 2,** la paume **201** d'une main **200** peut être divisée en plusieurs régions **202-206.** Le nombre, la forme et l'emplacement des régions **202** sont choisis conformément aux pratiques et aux protocoles définis par les institutions administratives et judiciaires des Etats. En pratique, il est, par exemple, possible de définir cinq régions **202-206** parmi une partie supérieure **202** de la paume **201,** une partie inférieure **203** de la paume **201,** une partie gauche **204** de la paume **201,** une partie droite **205** de la paume **201** et un centre **206** de paume **201.**

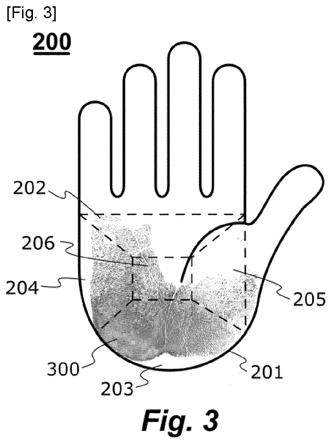

Un dactylogramme palmaire partiel susceptible d'être acquis à l'aide d'un dispositif **100** mobile tel que décrit précédemment peut couvrir tout ou partie d'une ou plusieurs régions **202-206** de la paume **201** de la main **200.** Par exemple, en référence à la **Fig. 3,** un dactylogramme palmaire partiel **300** peut couvrir la partie gauche **204** de la paume **201** et la partie inférieure **203** de la paume **201.**

Un dactylogramme de l'intégralité d'une paume de main peut être reconstitué ou reconstruit à partir de plusieurs dactylogrammes palmaires partiels à l'aide d'un traitement d'image, généralement par une mise en mosaïque. Ces traitements d'images consistent généralement à identifier des caractéristiques morphologies communes entre des zones de recouvrement des dactylogrammes palmaires partiels puis à déterminer, sur la base de ces caractéristiques morphologies

commune, une ou plusieurs transformations géométriques dont l'application sur les dactylogrammes palmaires partiels permettent de construire une mosaïque dans laquelle ces derniers sont utilisés comme des tesselles. EP 4 273 815 A1 [IDEMIA IDENTITY & SECURITY FRANCE [FR]] 08.11.2023 décrit un exemple de méthode de reconstruction d'un dactylogramme de l'intégralité d'une paume à partir de dactylogrammes palmaires partiels.

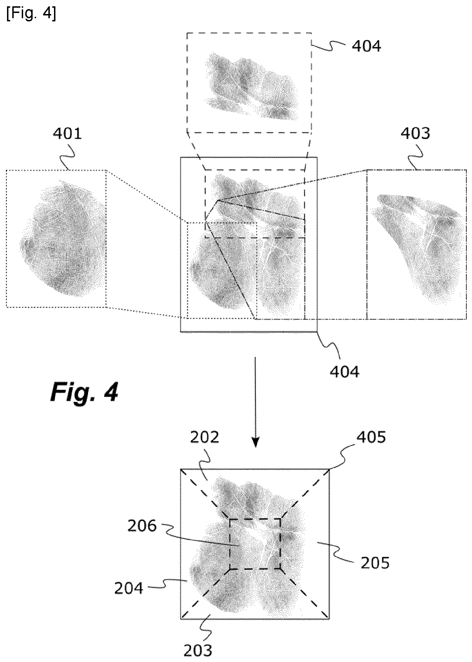

La reconstitution d'un dactylogramme de l'intégralité d'une paume à partir de dactylogrammes palmaires partiels est généralement réalisée par des étapes successives de mise en mosaïque de chaque dactylogramme palmaire partiel pour former un dactylogramme reconstitué complet. A titre d'exemple illustratif, en référence à la **Fig. 4,** deux dactylogrammes palmaires partiels **401, 402** sont d'abord « combinés » pour former un dactylogramme reconstitué intermédiaire **404.** Ensuite, chaque autre dactylogramme palmaire partiel **403** est successivement combiné au dactylogramme reconstitué intermédiaire **404** jusqu'à couvrir l'ensemble des régions **202-206** de la paume **201** pour former un dactylogramme reconstitué complet **405.**

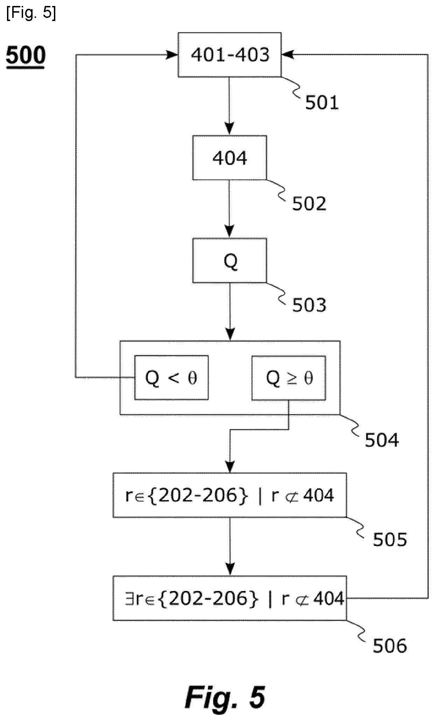

En référence à la **Fig. 5,** un premier aspect de l'invention concerne un procédé **500** de reconstitution d'un dactylogramme palmaire de l'intégralité d'une paume **201** d'une main **200,** le procédé comprend les étapes suivantes :

(a) Acquérir **501** un dactylogramme palmaire partiel **401-403** d'une région **202-206** de la paume **201** d'une main **200** ;
(b) Former **502** un dactylogramme reconstitué intermédiaire **404** par mise en mosaïque du dactylogramme palmaire partiel **401-403** ;
(c) Calculer **503** la valeur d'un critère **Q** de qualité du dactylogramme reconstitué intermédiaire **404** ;
(d) Répéter **504** les étapes **502** à **503** tant que la valeur du critère de qualité **Q** est inférieure à une valeur seuil θ, à chaque itération le dactylogramme palmaire partiel acquis **401-403** à l'étape **501** étant rejeté ;
(e) Déterminer **505** au moins une région **R** parmi les régions **202-206** de la paume **201** de la main **200** non couverte par le dactylogramme reconstitué intermédiaire **404** ;
(f) Répéter **506** les étapes **501** à **505** en sélectionnant, lors de l'étape **501,** la région déterminée **R** à l'étape **505,** tant que le dactylogramme reconstitué intermédiaire **404** ne couvre pas l'intégralité des régions **202-206** la paume **201** de la main **200.**

A l'étape **502,** le dactylogramme reconstitué intermédiaire **404** est une reconstitution à partir d'au moins un dactylogramme palmaire partiel **401-403.** Notamment, à la première itération du procédé **500** selon l'invention, le dactylogramme reconstitué intermédiaire **404** est constitué de tout ou partie d'un premier dactylogramme palmaire partiel **401-403** acquis à l'étape **501.** Lors des itérations suivantes, il est progressivement constitué de tout ou partie de plusieurs dactylogramme palmaire partiel **401-403** au fur et à mesure où ceux-ci sont acquis. La formation du dactylogramme reconstitué intermédiaire **404** est mise en œuvre à l'aide de toute méthode adaptée. Un exemple de méthode de reconstitution est décrit dans EP 4 273 815 A1 [IDEMIA IDENTITY & SECURITY FRANCE [FR]] 08.11.2023.

A l'étape **503,** le critère **Q** de qualité permet d'évaluer la qualité du dactylogramme reconstitué intermédiaire **404,** notamment si le contraste entre les sillons et les crêtes papillaires du dactylogramme est suffisant pour permettre une identification et une caractérisation des caractéristiques morphologiques, telles que les minuties, dudit dactylogramme **404.** En pratique, il est un indicateur de l'aptitude de la paume **201** de la main **200** à laisser une trace papillaire sur une surface.

L'aptitude de paume **201** d'une main **200** à laisser une trace papillaire sur une surface ou à en permettre l'acquisition d'un dactylogramme palmaire est généralement fonction de la quantité de graisse épidermique présente à la surface de la couche cornée de son épiderme. Si cette quantité est insuffisance, la paume **201** de la main **200** étant alors dite « sèche », l'amplitude des variations d'indices de réfraction ou de de réflexion entre les sillons et les crêtes papillaires sera trop faible. Un dactylogramme acquis à l'aide d'un dispositif optique tel qu'illustré sur la **Fig. 1** présentera un contraste insuffisant pour permettre une distinction correcte des caractéristiques morphologiques des dermatoglyphes. En revanche, si cette quantité est suffisante, la paume **201** de la main **200** étant alors dite « humide », l'amplitude des variations d'indices de réfraction ou de réflexion entre les sillons et les crêtes papillaires permettra d'obtenir un dactylogramme avec un contraste suffisant. Lorsqu'une paume **201** de main **200** est trop sèche, il est possible de l'humidifier, à l'aide d'une lingette ou d'une éponge adaptée, afin d'améliorer le contraste lors de l'acquisition du dactylogramme.

Le critère **Q** de qualité est de tout type adapté. Des exemples de critères de qualité, et leurs méthodes de détermination, sont décrit dans Alonso-Fernandez et al. (2007). A comparative study of fingerprint image-quality estimation methods. IEEE Transactions on Information Forensics and Security, 2(4), 734-743. Selon un mode préféré de réalisation, le critère **Q** de qualité est une valeur moyenne du gradient du dactylogramme reconstitué intermédiaire **404.**

La valeur seuil θ du critère **Q** de qualité dépend de la méthode utilisée pour l'évaluer et du degré de précision exigé par les opérateurs ou les administrations. A titre d'exemple pratique, lorsque le critère **Q** de qualité est une valeur moyenne, comprise entre 0 et 1, du gradient du dactylogramme reconstitué intermédiaire **406,** la valeur seuil θ peut être fixée à 0,90, voire 0,95. Lorsque la valeur du critère **Q** de qualité est inférieure à la valeur seuil, le contraste entre les sillons et les crêtes papillaires du dactylogramme reconstitué intermédiaire **404** est considéré comme insuffisant. Le procédé **500** peut alors prévoir en outre, à l'aide d'un écran d'affichage, une étape de notification invitant l'utilisateur à humidifier la paume **201** de la main **200** avant de réaliser une nouvelle acquisition d'un dactylogramme palmaire partiel **401-403**.

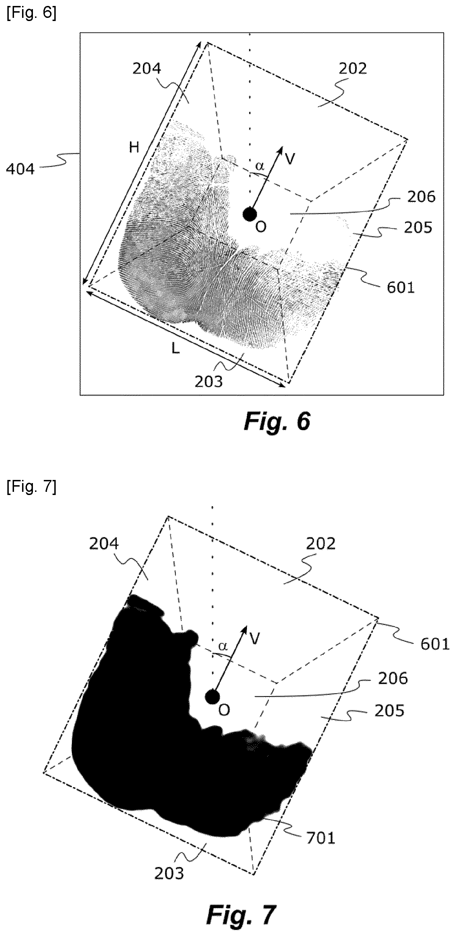

Selon certains modes de réalisation, en référence à la **Fig. 6,** l'étape **505** comprend une étape **505a** de de détermination d'une boîte englobante **601** dont les dimensions géométriques **H, L** correspondent à celles d'une taille de paume intégrale **201** estimée à partir du dactylogramme reconstitué intermédiaire **404**. Sur la **Fig. 6,** la boîte englobante **601** est un rectangle (représenté par une ligne discontinue de tirets et de points) dont les longueurs des côtés **H, L** sont telles que lesdits côtés délimitent l'intégralité de la paume **201** que la main **200** devrait avoir d'après les dimensions du dactylogramme reconstitué intermédiaire **404**.

Le boîte englobante **601** permet de définir les bordures de l'intégralité de la paume **201** de la main **200** même lorsque le dactylogramme intermédiaire reconstitué **404** est incomplet. Elle est considérée comme une représentation schématique de la paume **201** de la main **200,** et peut être divisée en même régions **202-206** que celles de la paume **201**. Grâce à cette boite englobante **601** et à sa division en régions **202-206,** un taux de couverture de la surface de ladite boîte **601** par le dactylogramme reconstitué intermédiaire **404** peut être calculé. Ce taux de couverture révèle le ou les régions **202-206** de la paume **201** non couvertes par ledit dactylogramme reconstitué intermédiaire **404**.

Selon certains modes de réalisation, les paramètres de la boîte englobante **601** comprennent le centre **O** de la boîte englobante **601,** un vecteur **V** d'orientation, une largeur **L,** une hauteur **H** et une classe **C** parmi la main droite et la main gauche. Le vecteur **V** d'orientation et la classe **C** parmi la main droite et la main gauche permettent de déterminer l'orientation réelle de la paume **201,** notamment la possibilité de distinguer entre la partie inférieure et la partie supérieure de la paume, et la partie droite et la partie gauche de la paume. Ainsi, il est possible de déterminer précisément, sur la paume **201,** la localisation des régions **202-206** non couvertes par le dactylogramme reconstitué intermédiaire **404**. Sur la base de cette information, le procédé peut également prévoir en outre, à l'aide d'un écran d'affichage, une étape de notification informant quelle partie de la paume **201** de la main **200** il est nécessaire d'apposer sur la surface **102** d'acquisition du dispositif **100** d'acquisition pour compléter les régions non couvertes du dactylogramme reconstitué intermédiaire **404**.

La boite englobante **601** est déterminée à l'aide de toute méthode adaptée. De préférence, elle est déterminée à l'aide d'un réseau de neurones convolutif tel qu'un réseau de type YOLO décrit dans Redmon, J. (2016). You only look once: Unified, real-time object detection. In Proceedings of the IEEE conference on computer vision and pattern recognition, en particulier un réseau du type YOLOv7 décrit dans Wang et al. (2023). YOLOv7: Trainable bag-of-freebies sets new state-of-the-art for real-time object detectors. In Proceedings of the IEEE/CVF conference on computer vision and pattern recognition (pp. 7464-7475).

L'entraînement du réseau de neurones convolutif est réalisé selon toute méthode adaptée. Selon un exemple dans lequel le réseau de neurones convolutif est un réseau de type YOLOv7, il peut être entraîné sur un ensemble de dactylogrammes palmaires intégraux et/ou partiels annotés par des boîtes englobantes dont les paramètres comprennent le centre de la boîte englobante, un vecteur d'orientation, une largeur, une hauteur et une classe parmi la main droite et la main gauche. Pour diversifier les données d'entrainement peuvent être avantageusement utilisées des méthodes d'augmentation de données telles que la rotation et/ou le redimensionnement des dactylogrammes, le masquage de parties des dactylogrammes, l'ajout de bruit, par exemple un bruit de type gaussien, des opérations d'inversion et/ou des opérations de décadrage.

Avantageusement, une fonction de coût de type entropie croisée peut être utilisée pour l'entraînement du réseau de neurones convolutif sur l'ensemble d'entraînement. En particulier, la fonction de coût peut être la somme de trois fonctions de coût de type entropie croisée :

$$f = \sum (L_o + L_c + L_b)$$

$L_o$ est une fonction de coût de type entropie croisée correspondant à la présence ou l'absence d'une boîte englobante ; $L_c$ est une fonction de type entropie croisée correspondant à la classe droite ou gauche du dactylogramme ; $L_b$ est une fonction de type distance combinant des mesures d'intersection sur union (iou), distance de Manhattan (L1) et de régularisation euclidienne (L2) permettant de déterminer les paramètres (dimension, orientation) de la boîte englobante. Dans la fonction $L_b,$ les paramètres correspondant au vecteur **V** d'orientation sont exprimés à l'aide d'une ou plusieurs fonctions trigonométriques d'un angle α d'inclinaison d'une direction représentative de la boîte englobante avec une direction de référence.

Selon certains modes de réalisation, en référence à la **Fig. 7,** le procédé **500** comprend, avant l'étape **505,** une étape **505a** de détermination d'un masque graphique **701** du dactylogramme reconstitué intermédiaire **404,** et, à l'étape **505,** une étape de superposition du masque graphique **701** et de la boîte englobante **601,** la région **(R)** non couverte par le dactylogramme reconstitué intermédiaire **404** étant la région de la boîte englobante **601** non couverte par le masque graphique **701**.

Le masque graphique **701** est une représentation simplifiée de la surface de la paume **201** de la main **200** couverte par le dactylogramme reconstitué intermédiaire **404.** En d'autres termes, il représente la surface des régions **202-206** de la paume **201** de la main **200** pour lesquelles un dactylogramme est disponible. Dans l'exemple représenté sur la **Fig. 7,** le masque graphique **701** couvre les régions **203** et **204** ; les régions **202, 205** et **206** ne sont pas couvertes. A l'étape **506,** une de ces trois régions **202, 205, 206** peut être sélectionnée pour la prochaine itération des étapes **501** à **505** du procédé **500.** L'ensemble des régions **202-206** de la boîte englobante **601** est considéré comme couverte par le masque graphique **701** lorsque, par exemple, le rapport de communauté, ou indice de Jaccard, entre la surface de la boîte englobante **601** et le masque graphique **701** tend vers l'unité, ou encore est supérieur à une valeur seuil, par exemple 0,80 voire 0,90 ou encore 0,95. Une région **202-206** est considérée comme couverte par le masque graphique **701** lorsque le rapport de Jaccard pour cette région **202-206** entre ladite région **202-206** et le maque graphique **701** tend vers l'unité, ou encore est supérieur à une valeur seuil, par exemple 0,80 voire 0,90 ou encore 0,95

Le masque graphique peut être obtenu par un traitement de segmentation du dactylogramme reconstitué intermédiaire **404.** Il peut alors être une image binaire dont les valeurs 0, resp. 1, représentent le dactylogramme reconstitué intermédiaire 406, et le valeurs 1, resp. 0, représente l'arrière-plan. Des exemples de traitement de segmentation sont : ligne de partage des eaux (« watershed ») ; Mask R-CNN décrit dans He, et al. (2017). Mask R-CNN. In Proceedings of the IEEE international conference on computer vision, p. 2961-2969 ; GrabCut décrit dans Rother et al. (2004). " GrabCut" interactive foreground extraction using iterated graph cuts. ACM transactions on graphics (TOG), 23(3), 309-314.

Comme précédé exposé, la paume **201** d'une main **200** peut être divisée en plusieurs régions **202-206.** La boîte englobante **601** peut être considérée comme un intermédiaire fournissent une représentation géométrique simplifiée de la paume **201** de la main **200,** notamment sous la forme d'un rectangle. Sa surface peut alors être subdivisée en plusieurs régions **202-206** représentant schématiquement les régions **202-206** de la paume **201** de la main **200.** La superposition du masque graphique 701 et de la boîte englobante **601** permet alors mettre en évidence les régions **202-206** de la boîte englobante **601** non couvertes par ledit masque graphique **701,** et par conséquent, par le dactylogramme reconstitué intermédiaire **404.** A l'étape **506** du procédé **500** une région **R** de la paume **201** de la main **200** peut alors être sélectionnée parmi ces régions **202-206** non couvertes.

Un deuxième aspect de l'invention concerne un système d'acquisition d'un dactylogramme palmaire de l'intégralité d'une paume **201** d'une main **200,** le système comprend :

- un dispositif **100** mobile d'acquisition de dactylogramme palmaire ;

- un dispositif de traitement de données configuré pour recevoir dactylogramme palmaire partiel du dispositif **100** mobile d'acquisition, et comprenant des moyens pour la mise en œuvre d'un procédé **500** de restauration selon l'un des quelconques modes de réalisation du premier aspect de l'invention.

Le dispositif de traitement est chargé d'exécuter automatiquement des séquences d'opérations arithmétiques ou logiques pour réaliser des tâches ou des actions. Ce dispositif, communément appelé ordinateur, peut comprendre une ou plusieurs unités centrales de traitement (CPU) et/ou un ou plusieurs processeurs graphiques (GPU), un module physique de communication à distance, un ou plusieurs modules physique d'entrée / sortie pour l'échanges de données avec des dispositifs externes, un support de stockage transitoire tel qu'une mémoire vive (RAM), un support d'enregistrement non-transitoire, et des bus de communication (non représentés) pour le transfert de données entre les composants internes du dispositif.

Le dispositif de traitement de données permet l'exécution d'un ou plusieurs modules de programmes comprenant des instructions qui, lorsque le ou les modules de programme sont exécutés, conduisent ledit dispositif à exécuter le procédé **500** du premier aspect de l'invention. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le dispositif de traitement de données peut faire partie intégrante du dispositif **100** mobile d'acquisition de dactylogramme palmaire. En particulier, il peut être la carte électronique de contrôle du dispositif **100** mobile d'acquisition.

Alternativement, le dispositif de traitement de données peut être un élément rapporté, tel qu'un ordinateur portable ou dispositif électronique mobile, par exemple une tablette tactile, en communication filaire ou sans fil avec le dispositif **100** mobile d'acquisition de dactylogramme palmaire.

Selon certains modes de réalisation, le système comprend en outre un dispositif d'affichage configuré pour afficher le dactylogramme reconstitué intermédiaire **404,** la région **R** de la paume **201** de main **200** non couverte par le dactylogramme reconstitué intermédiaire **404** et sélectionnée à l'étape **506** du procédé **500** du premier aspect de l'invention, et/ou des notifications à destination de l'utilisateur du système telles que celles décrites précédemment. Le dispositif d'affichage peut être un écran intégré au dispositif de traitement de donnée ou dispositif **100** mobile d'acquisition.

**Références**

Littérature brevet

EP 4 273 815 A1 [IDEMIA IDENTITY & SECURITY FRANCE [FR]] 08.11.2023.

Littérature non-brevet

Rother et al.. (2004). " GrabCut" interactive foreground extraction using iterated graph cuts. ACM transactions on graphics (TOG), 23(3), 309-314.

Alonso-Fernandez et al. (2007). A comparative study of fingerprint image-quality estimation methods. IEEE Transactions on Information Forensics and Security, 2(4), 734-743.

Redmon et al. (2016). You only look once: Unified, real-time object detection. In Proceedings of the IEEE conference on computer vision and pattern recognition.

He, et al. (2017). Mask R-CNN. In Proceedings of the IEEE international conference on computer vision, p. 2961-2969.

Wang et al. (2023). YOLOv7: Trainable bag-of-freebies sets new state-of-the-art for real-time object detectors. In Proceedings of the IEEE/CVF conference on computer vision and pattern recognition (pp. 7464-7475).

**Revendications**

1. Procédé **(500)** de reconstitution d'un dactylogramme palmaire de l'intégralité d'une paume **(201)** d'une main **(200),** le procédé comprend les étapes suivantes :

    (a) Acquérir **(501)** un dactylogramme palmaire partiel **(401-403)** d'une région **(202-206)** de la paume **(201)** d'une main **(200)** ;
    (b) Former **(502)** un dactylogramme reconstitué intermédiaire **(404)** par mise en mosaïque du dactylogramme palmaire partiel **(401-403)** ;
    (c) Calculer **(503)** la valeur d'un critère **(Q)** de qualité du dactylogramme reconstitué intermédiaire **(404)** ;
    (d) Répéter **(504)** les étapes **502** à **503** tant que la valeur du critère de qualité **(Q)** est inférieure à une valeur seuil **(θ)**, à chaque itération le dactylogramme palmaire partiel acquis **(401-403)** à l'étape **501** étant rejeté ;
    (e) Déterminer **(505)** au moins une région **(R)** parmi les régions **(202-206)** de la paume **(201)** de la main **(200)** non couverte par le dactylogramme reconstitué intermédiaire **(404)** ;
    (f) Répéter **(506)** les étapes **(501)** à **(505)** en sélectionnant, lors de l'étape **(501)**, la région déterminée **(R)** à l'étape **(505),** tant que le dactylogramme reconstitué intermédiaire **(404)** ne couvre pas l'intégralité des régions **(202-206)** la paume **(201)** de la main **(200).**

2. Procédé **(500)** selon la revendication 1, tel que l'étape **(505)** comprend une étape **(505a)** de de détermination d'une boîte englobante **(601)** dont les dimensions géométriques **(H, L)** correspondent à celles d'une taille de paume intégrale **(201)** estimée à partir du dactylogramme reconstitué intermédiaire **(404).**

3. Procédé **(500)** selon la revendication 2, tel que les paramètres de la boîte englobante **(601)** comprennent le centre **(O)** de la boîte englobante **(601),** un vecteur **(V)** d'orientation, une largeur **(L),** une hauteur **(H)** et une classe **(C)** parmi la main droite et la main gauche.

4. Procédé **(500)** selon l'une quelconque des revendication 2 à 3, tel que la boîte englobante **(601)** est déterminée à l'aide d'un un réseau de neurones convolutif.

5. Procédé **(500)** selon l'une quelconque des revendications 2 à 4, tel qu'il comprend, avant l'étape **(505)**, une étape **(505a)** de détermination d'un masque graphique **(701)** du dactylogramme reconstitué intermédiaire **(404), et**, à l'étape **(505)**, une étape de superposition du masque graphique **(701)** et de la boîte englobante **(601)**, la région **(R)** non couverte par le dactylogramme reconstitué intermédiaire **(404)** étant la région de la boîte englobante **(601)** non couverte par le masque graphique **(701).**

6. Procédé **(500)** selon l'une quelconque des revendications 2 à 5, tel que la boîte englobante **(601)** comprend cinq régions **(202-206)** parmi une partie supérieure **(202)** de la paume **(201),** une partie inférieure **(203)** de la paume **(201),** une partie gauche **(204)** de la paume **(201),** une partie droite **(205)** de la paume **(201)** et un centre **(206)** de paume **(201).**

7. Procédé **(500)** selon l'une quelconque des revendications 1 à 6, tel que le critère **(Q)** de qualité est une valeur moyenne du gradient du dactylogramme reconstitué intermédiaire **(404).**

8. Système d'acquisition d'un dactylogramme palmaire de l'intégralité d'une paume **(201)** d'une main **(200),** le système comprend :

    - un dispositif **(100)** mobile d'acquisition de dactylogramme palmaire ;

- un dispositif de traitement de données configuré pour recevoir dactylogramme palmaire partiel du dispositif **(100)** mobile d'acquisition, et comprenant des moyens pour la mise en œuvre d'un procédé **(500)** de restauration selon l'une quelconque des revendications 1 à 7.

**9.** Système selon la revendication 8, tel qu'il comprend en outre un dispositif d'affichage configuré pour afficher le dactylogramme reconstitué intermédiaire **(404)**, la région **(R)** de la paume **(201)** de main **(200)** non couverte par le dactylogramme reconstitué intermédiaire **(404)** et sélectionnée à l'étape **(506)** du procédé **(500).**

[Fig. 1]

**100**

**Fig. 1**

[Fig. 2]

**200**

**Fig. 2**

EP 4 773 088 A1

[Fig. 3]

**200**

Fig. 3

10

[Fig. 4]

404

401

403

404

*Fig. 4*

202    405

206

205

204

203

[Fig. 5]

**500**

Fig. 5

[Fig. 6]

**Fig. 6**

[Fig. 7]

**Fig. 7**

Europäisches Patentamt
European Patent Office
Office européen des brevets

## RAPPORT DE RECHERCHE EUROPEENNE

Numéro de la demande

EP 25 20 1917

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2023/360428 A1 (MABYALAHT GUY [FR] ET AL) 9 novembre 2023 (2023-11-09) | 1,8,9 | INV.<br>G06V10/10 |
| A | * alinéa [0007] *<br>* alinéa [0075] - alinéa [0079] *<br>----- | 2-7 | G06V10/25<br>G06V10/82<br>G06V10/98 |
| Y | EP 1 724 725 A1 (NEC CORP [JP]) 22 novembre 2006 (2006-11-22) | 1,8,9 | G06V40/12<br>G06V40/10 |
| A | * alinéa [0030] - alinéa [0031] *<br>* page 19; figure 2 *<br>----- | 2-7 | |
| A | RAO SHISHIR PARAMATHMA ET AL: "A novel method for rotation invariant palm print image stitching",<br>PROCEEDINGS OF SPIE; [PROCEEDINGS OF SPIE ISSN 0277-786X VOLUME 10524], SPIE, US,<br>vol. 10221, 10 mai 2017 (2017-05-10),<br>pages 102210N-102210N, XP060089370,<br>DOI: 10.1117/12.2262366<br>ISBN: 978-1-5106-1533-5<br>* le document en entier *<br>----- | 1-9 | |
| A | US 11 074 427 B2 (IDEMIA IDENTITY & SECURITY FRANCE [FR] ET AL.) 27 juillet 2021 (2021-07-27)<br>* le document en entier *<br>----- | 1-9 | DOMAINES TECHNIQUES RECHERCHES (IPC)<br><br>G06V |
| A | US 6 370 263 B1 (HIRATSUKA SEIICHI [JP] ET AL) 9 avril 2002 (2002-04-09)<br>* le document en entier *<br>----- | 1-9 | |

Le présent rapport a été établi pour toutes les revendications

| Lieu de la recherche | Date d'achèvement de la recherche | Examinateur |
|---|---|---|
| La Haye | 10 décembre 2025 | Gissot, Samuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 1917

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-12-2025

| Document brevet cité au rapport de recherche | Date de publication | Membre(s) de la famille de brevet(s) | Date de publication |
|---|---|---|---|
| US 2023360428 A1 | 09-11-2023 | AU 2023202247 A1 | 23-11-2023 |
| | | BR 102023007257 A2 | 14-11-2023 |
| | | CA 3197893 A1 | 03-11-2023 |
| | | CL 2023001241 A1 | 20-10-2023 |
| | | CO 2023005257 A1 | 29-04-2024 |
| | | EP 4273815 A1 | 08-11-2023 |
| | | FR 3130427 A1 | 16-06-2023 |
| | | US 2023360428 A1 | 09-11-2023 |
| | | ZA 202304892 B | 28-08-2024 |
| EP 1724725 A1 | 22-11-2006 | CN 1954341 A | 25-04-2007 |
| | | EP 1724725 A1 | 22-11-2006 |
| | | JP 4029412 B2 | 09-01-2008 |
| | | JP WO2005086091 A1 | 24-04-2008 |
| | | US 2007189586 A1 | 16-08-2007 |
| | | WO 2005086091 A1 | 15-09-2005 |
| US 11074427 B2 | 27-07-2021 | EP 3621026 A1 | 11-03-2020 |
| | | FR 3085780 A1 | 13-03-2020 |
| | | US 2020082149 A1 | 12-03-2020 |
| US 6370263 B1 | 09-04-2002 | CA 2258431 A1 | 14-07-1999 |
| | | CN 1223416 A | 21-07-1999 |
| | | DE 69920296 T2 | 23-02-2006 |
| | | EP 0930580 A2 | 21-07-1999 |
| | | JP 2944602 B2 | 06-09-1999 |
| | | JP H11203474 A | 30-07-1999 |
| | | KR 19990067885 A | 25-08-1999 |
| | | SG 72916 A1 | 23-05-2000 |
| | | TW 424206 B | 01-03-2001 |
| | | US 6370263 B1 | 09-04-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- EP 4273815 A1

**Littérature non-brevet citée dans la description**

- **ALONSO-FERNANDEZ et al.** A comparative study of fingerprint image-quality estimation methods. *IEEE Transactions on Information Forensics and Security*, 2007, vol. 2 (4), 734-743
- **REDMON, J.** You only look once: Unified, real-time object detection. *Proceedings of the IEEE conference on computer vision and pattern recognition*, 2016
- **WANG et al.** YOLOv7: Trainable bag-of-freebies sets new state-of-the-art for real-time object detectors. *Proceedings of the IEEE/CVF conference on computer vision and pattern recognition*, 2023, 7464-7475
- **HE et al.** Mask R-CNN. *Proceedings of the IEEE international conference on computer vision*, 2017, 2961-2969
- **ROTHER et al.** GrabCut'' interactive foreground extraction using iterated graph cuts. *ACM transactions on graphics (TOG)*, 2004, vol. 23 (3), 309-314
- **REDMON et al.** You only look once: Unified, real-time object detection. *Proceedings of the IEEE conference on computer vision and pattern recognition*, 2016